# EUROPEAN PATENT SPECIFICATION

(11) **EP 3 695 986 B1**
(45) Date of publication and mention of the grant of the patent: **28.04.2021**
(21) Application number: 20153490.6
(22) Date of filing: 24.01.2020
(51) Int. Cl.: B60C 11/03, B60C 11/12

(54) **TYRE**
REIFEN
PNEUMATIQUE

(30) Priority: 13.02.2019 JP 2019023714; 13.02.2019 JP 2019023717; 13.02.2019 JP 2019023719; 29.03.2019 JP 2019066630
(43) Date of publication of application: 19.08.2020
(73) Proprietor: Sumitomo Rubber Industries, Ltd., Kobe-shi, Hyogo-ken 651-0072 (JP)
(72) Inventor: TAKENAKA, Hiroto, Kobe-shi, Hyogo 651-0072 (JP); TAMAI, Junya, Kobe-shi, Hyogo 651-0072 (JP); KAWAZU, Akari, Kobe-shi, Hyogo 651-0072 (JP)
(74) Representative: Manitz Finsterwald Patent- und Rechtsanwaltspartnerschaft mbB

(56) References cited:
- EP-A2- 2 514 608
- JP-A- 2010 126 046
- US-A1- 2018 178 589

## Description

### BACKGOUND ART

### Field of the disclosure

The present invention relates to a tyre, more particularly to a tyre including a tread portion having a designated mounting direction to a vehicle.

### Description of the Related Art

Recently, tyres having tread portions with a designated mounting direction to a vehicle have been proposed. For example, the following Patent document 1 discloses a pneumatic tyre including a tread center land portion which is provided with a plurality of center sipes having a width of less than 2 mm, but is not provided with any grooves that have groove widths more than 2 mm and that traverse the land portion completely in the tyre axial direction. The above-mentioned pneumatic tyre enhances stiffness of the tread center land portion, thus expecting to improve steering stability on dry road conditions.

[Patent document 1] Japanese Unexamined Patent Application Publication 2015-140047

A tyre in accordance with the preamble of claim 1 is known from document US 2018/178589 A1. Tyres provided with symmetric treads comprising lateral grooves provided with raised portions are known from documents EP 2 514 608 A2 and JP 2010 126046 A.

### SUMMARY OF THE DISCLOSURE

Since the tread center land portion has high stiffness, the above-mentioned pneumatic tyre tends to deteriorate noise performance due to large impact noise generated by the tread center land portion upon grounding. The inventors have found out that steering stability and noise performance of tyre can be improved by improving an arrangement of the lateral grooves in tyres having a tread portion with a designated mounting direction.

The present invention has been made in view of the above problem and has a major object to provide a tyre capable of improving steering stability and noise performance.

According to the invention, a tyre includes a tread portion having a designated mounting direction to a vehicle, the tread portion including a first tread edge and a second tread edge to be located outwardly and inwardly of a vehicle, respectively, when being mounted to the vehicle, two or more main grooves extending continuously in a tyre circumferential direction between the first tread edge and the second tread edge, and two or more land portions divided by the main grooves, wherein the main grooves include a first shoulder main groove disposed between the first tread edge and a tyre equator, a second shoulder main groove disposed between the second tread edge and the tyre equator, and a crown main groove disposed between the first shoulder main groove and the second shoulder main groove, the land portions include a first middle land portion defined between the first shoulder main groove and the crown main groove, and a second middle land portion defined between the second shoulder main groove and the crown main groove, the first middle land portion is provided with two or more first middle lateral grooves traversing the first middle land portion completely in a tyre axial direction, the second middle land portion is provided with two or more second middle lateral grooves traversing the second middle land portion completely in the tyre axial direction, at least one of the first middle lateral grooves includes a raised portion in which a groove bottom thereof is raised, the raised portion of the at least one of the first middle lateral grooves traversing a center location in the tyre axial direction of the first middle land portion, at least one of the second middle lateral grooves includes a raised portion in which a groove bottom thereof is raised, the raised portion of the at least one of the second middle lateral grooves traversing a center location in the tyre axial direction of the second middle land portion, and a length in the tyre axial direction of the raised portion of the at least one of the first middle lateral grooves is greater than a length in the tyre axial direction of the raised portion of the at least one of the second middle lateral grooves.

In another aspect of the invention, the length in the tyre axial direction of the raised portion of the at least one of the first middle lateral grooves may be in a range of from 1.05 to 1.25 times the length in the tyre axial direction of the raised portion the at least one of the second middle lateral grooves.

In another aspect of the invention, a depth of the raised portion of the at least one of the first middle lateral grooves and a depth of the raised portion of the at least one of the second middle lateral grooves may be in a range of from 0.10 to 0.60 times a depth of the crown main groove.

In another aspect of the invention, in a plan view of the tread portion, each of the first middle lateral grooves and the second middle lateral grooves may be provided with the raised portion which is inclined at an angle with respect to the tyre axial direction, a first outer portion extending from a first end of the raised portion and having a smaller angle with respect to the tyre axial direction than the angle of the raised portion, and a second outer portion extending from a second end of the raised portion and having a smaller angle with respect to the tyre axial direction than the angle of the raised portion, so as to form a curved groove.

In another aspect of the invention, the curved groove may have an S-shaped manner.

In another aspect of the invention, in each of the first middle lateral grooves and the second middle lateral grooves, a length in the tyre axial direction of the raised portion may be greater than those in the tyre axial direction of the first outer portion and the second outer portion.

In another aspect of the invention, in each of the second middle lateral grooves, a length in the tyre axial direction of the second outer portion may be greater than a length in the tyre axial direction of the first outer portion.

In another aspect of the invention, in a plan view of the tread portion, each of the first middle lateral grooves and the second middle lateral grooves may be a curved groove which includes a first convex portion located on a first side with respect to a groove-reference-straight-line that connects both ends of a groove centerline thereof and a second convex portion located on a second side with respect to the groove-reference-straight-line of the curved groove.

In another aspect of the invention, in a plan view of the tread portion, the raised portion of the at least one of the first middle lateral grooves may be inclined in a first direction with respect to the tyre axial direction, and the raised portion of the at least one of the second middle lateral grooves may be inclined in a second direction which is opposite to the first direction with respect to the tyre axial direction.

In another aspect of the invention, an angle θ1 with respect to the tyre axial direction of the raised portion of the at least one of the first middle lateral grooves may be smaller than an angle θ2 with respect to the tyre axial direction of the raised portion of the at least one of the second middle lateral grooves.

In another aspect of the invention, the first middle lateral grooves and the second middle lateral grooves, at both ends thereof in the tyre axial direction, may have a depth in a range of from 0.30 to 0.80 times a depth of the crown main groove.

In another aspect of the invention, a length in the tyre axial direction of the raised portion of the at least one of the first middle lateral grooves may be in a range of from 0.30 to 0.80 times a width in the tyre axial direction of the first middle land portion.

In another aspect of the invention, a length in the tyre axial direction of the raised portion of the least one of the second middle lateral grooves may be in a range of from 0.30 to 0.80 times a width in the tyre axial direction of the second middle land portion.

In another aspect of the invention, the first middle land portion may include two or more first middle blocks divided by the first middle lateral grooves, the second middle land portion may include two or more second middle blocks divided by the second middle lateral grooves, each first middle lateral groove may have a groove-reference-straight-line that connects both ends of a groove centerline thereof being inclined in a first direction with respect to the tyre axial direction, and each second middle lateral groove may have a groove-reference-straight-line that connects both ends of a groove centerline thereof being inclined in a second direction which is opposite to the first direction with respect to the tyre axial direction.

In another aspect of the invention, each first middle block may be a smooth block having a ground contacting face which is not provided with any grooves nor sipes, and each second middle block may be provided with at least one second middle sipe extending from the second shoulder main groove and terminating within the second middle block.

### DESCRIPTION OF THE PREFERRED EMBODIMENTS

FIG. 1 is a development view of a tread portion of a tyre in accordance with an embodiment of the present invention;
FIG. 2 is an enlarged view of a first middle land portion and a second middle land portion of FIG. 1;
FIG. 3 is a cross-sectional view taken along line A-A of FIG. 2;
FIG. 4 is an enlarged view of a first shoulder land portion of FIG. 1;
FIG. 5 is a cross-sectional view taken along line B-B of FIG. 4;
FIG. 6 is an enlarged view of a second shoulder land portion of FIG. 1;
FIG. 7 is a cross-sectional view taken along line C-C of FIG. 6;
FIG. 8 is a cross-sectional view taken along line D-D of FIG. 6; and
FIG. 9 is an enlarged view of the first middle land portion and the second middle land portion of a tyre according to a comparative example 3.

### DESCRIPTION OF THE PREFERRED EMBODIMENTS

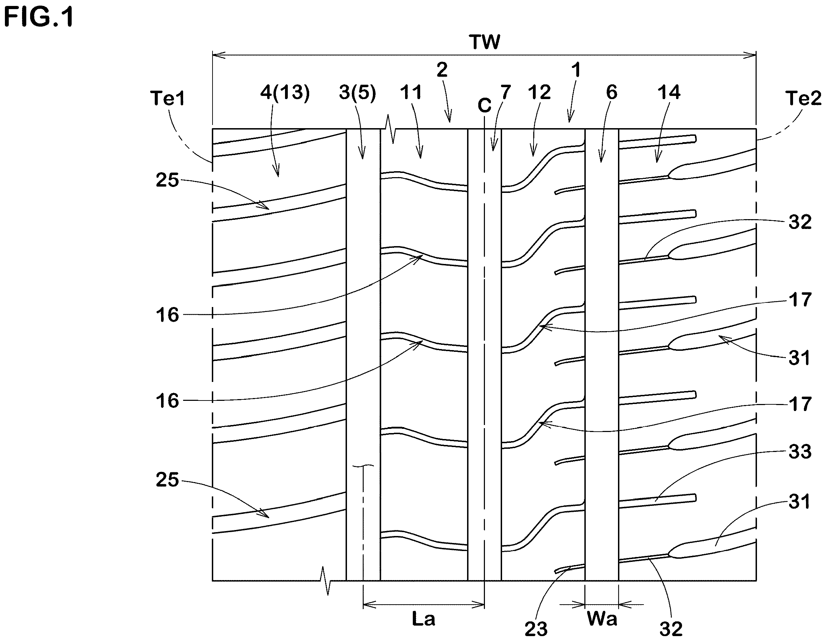

An embodiment of the present invention will be explained below with reference to the accompanying drawings. FIG. 1 illustrates a development view of a tread portion 2 of a tyre 1 in accordance with an embodiment of the present invention. The tyre 1 according to the present embodiment is preferably embodied as a pneumatic tyre for passenger car. Note that the tyre 1 is not limited to such an aspect but can be embodied as a heavy-duty tyre and a non-pneumatic tyre which can structurally support the tyre load without being inflated with a compressed air, for example.

As illustrated in FIG. 1, the tyre 1 according to the present invention includes the tread portion 2 having a designated mounting direction to a vehicle. The tread portion 2 includes a first tread edge Te1 to be located outwardly of a vehicle when being mounted to the vehicle, and a second tread edge Te2 to be located inwardly of the vehicle when being mounted to the vehicle. The mounting direction to a vehicle may be indicated on a sidewall portion (not illustrated) using a letter or mark.

The first tread edge Te1 and the second tread edge Te2, when the tyre 1 is a pneumatic tyre, are the axial outermost edges of the ground contacting patch of the tyre 1 which occurs under a normal condition with a standard tyre load when the camber angle of the tyre is zero. As used herein, the "normal condition" is such that the tyre 1 is mounted onto a standard wheel rim with a standard pressure but loaded with no tyre load. Unless otherwise noted, dimensions of respective portions of the tyre 1 are values measured under the normal condition.

The "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

The "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

The standard tyre load is a tyre load officially approved for each tyre by standards organizations in which the tyre is based, wherein the standard tyre load is the "maximum load capacity" in JATMA, the maximum value given in the above-mentioned table in TRA, the "Load Capacity" in ETRTO, for example.

The tread portion 2 includes two or more main grooves 3 extending continuously in the tyre circumferential direction between the first tread edge Te1 and the second tread edge Te2, and two or more land portions 4 divided by the main grooves 3.

The main grooves 3 include a first shoulder main groove 5 disposed between the first tread edge Te1 and the tyre equator C, a second shoulder main groove 6 disposed between the second tread edge Te2 and the tyre equator C, and a crown main groove 7 disposed between the first shoulder main groove 5 and the second shoulder main groove 6.

It is preferable that a length La in the tyre axial direction from the tyre equator C to a groove centerline of either one of the first shoulder main groove 5 or the second shoulder main groove 6, for example, is in a range of from 0.15 to 0.30 times the tread width TW. The tread width TW is a distance in the tyre axial direction from the first tread edge Te1 to the second tread edge Te2 under the normal condition.

As the crown main groove 7 according to the present embodiment, a single crown groove is provided on the tyre equator C, for example. In another aspect, two crown main groove 7 may be provided such that the tyre equator C is located therebetween, for example.

Each main groove 3 according to the present embodiment, for example, extends in a straight shape parallel with the tyre circumferential direction, i.e., having a pair of groove edges extending straight shape parallel with the tyre circumferential direction. Alternatively, the main grooves 3, for example, may extend in a zigzag or wavy manner.

It is preferable that a groove width Wa of the main grooves 3, for example, is in a range of from 4.0% to 7.0% of the tread width TW. It is preferable that a depth of the main grooves 3, for example, is in a range of from 5 to 10 mm for a pneumatic passenger car tyre.

The land portions 4 include a first middle land portion 11, a second middle land portion 12, a first shoulder land portion 13, and a second shoulder land portion 14. The tread portion 2 according to the present embodiment has a four-rib pattern which is configured by three main grooves 3 and four land portions 4. In another aspect of the present disclosure, the tread portion 2 may have a five-rib pattern which is configured by five land portions 4 divided by four main grooves including two crown main grooves 7, for example.

The first middle land portion 11 is defined between the first shoulder main groove 5 and the crown main groove 7. The second middle land portion 12 is defined between the second shoulder main groove 6 and the crown main groove 7. The first shoulder land portion 13 is defined between the first shoulder main groove 5 and the first tread edge Te1. The second shoulder land portion 14 is defined between the second shoulder main groove 6 and the second tread edge Te2.

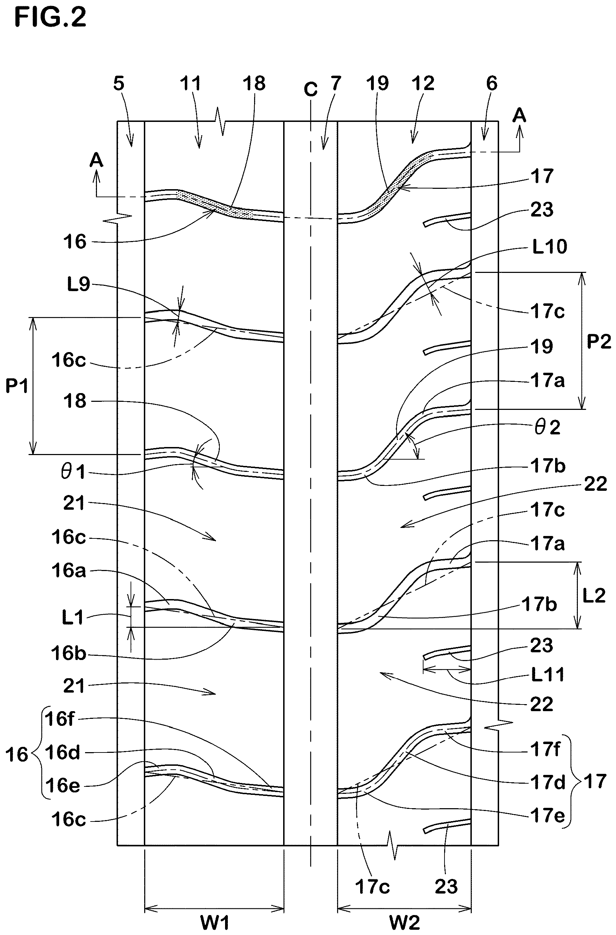

FIG. 2 illustrates an enlarged view of the first middle land portion 11 and the second middle land portion 12. As illustrated in FIG. 2, it is preferable that widths W1 and W2 in the tyre axial direction of the first middle land portion 11 and the second middle land portion 12, respectively, are preferably in a range of from 0.10 to 0.25 times the tread width TW, for example.

The first middle land portion 11 is provided with two or more first middle lateral grooves 16. The first middle lateral grooves 16 traverse the first middle land portion 11 completely in the tyre axial direction. The second middle land portion 12 is provided with two or more second middle lateral grooves 17. The second middle lateral grooves 17 traverse the second middle land portion 12 completely in the tyre axial direction. A groove width of the first middle lateral grooves 16 and the second middle lateral grooves 17, for example, is in a range of from 0.10 to 0.20 times a groove width of the crown main groove 7.

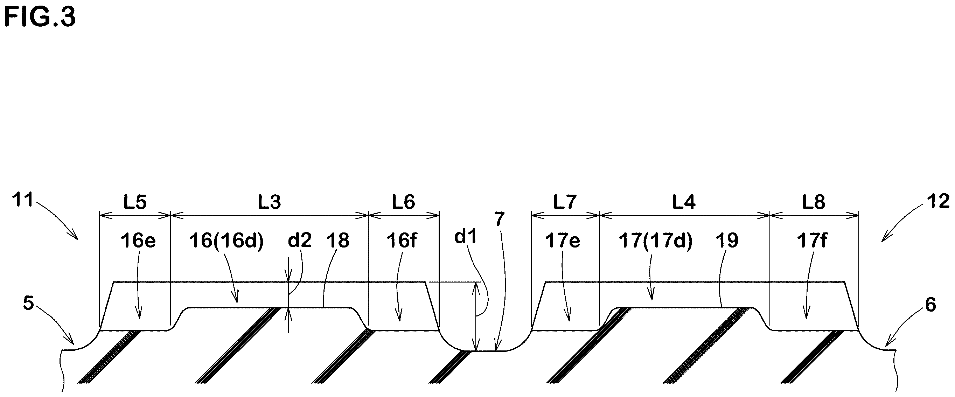

FIG. 3 illustrates a cross-sectional view of one of the first middle lateral grooves 16 and one of the second middle lateral grooves 17 taken along line A-A of FIG. 2. As illustrated in FIG. 3, in the present disclosure, at least one of the first middle lateral grooves 16 includes a raised portion 18 in which a groove bottom thereof is raised. In addition, at least one of the second middle lateral grooves 17 includes a raised portion 19 in which a groove bottom thereof is raised.

To help understand the raised portions 18 and 19, they are colored on one of the first middle lateral grooves 16 and one of the second middle lateral grooves 17 in FIG. 2. As illustrated in FIG. 2, the raised portions 18 and 19 traverse the respective center locations in the tyre axial direction of the first middle land portion 11 and the second middle land portion 12, respectively. The first middle lateral groove 16 and the second middle lateral groove 17 which include the above-mentioned raised portions can prevent deformation of the first middle land portion 11 and the second middle land portion 12 effectively, and thus superior steering stability can be exerted. As a preferred embodiment, in the present embodiment, each of the first middle lateral grooves 16 and the second middle lateral grooves 17 includes a respective raised portion which has the above-mentioned structure.

Further, the first middle lateral grooves 16 and the second middle lateral grooves 17 can reduce pumping noise by the raised portions which disturb air flow through the grooves. In addition, the first middle lateral grooves 16 and the second middle lateral grooves 17 with the raised portions can ensure sufficient stiffness of the respective middle land portions, thus improving steering stability.

As illustrated in FIG. 3, a length L3 in the tyre axial direction of the raised portions 18 of the first middle lateral grooves 16 is greater than a length L4 in the tyre axial direction of the raised portions 19 of the second middle lateral grooves 17. Such a structure of the grooves can enhance stiffness of the first middle land portion 11 relatively. Thus, upon cornering where the center of the ground contact area moves to the first tread edge Te1 side, steering feeling can be linear, resulting in superior steering stability.

In some preferred embodiments, the length L3 of the raised portions 18 of the first middle lateral grooves 16 is in a range of from 1.05 to 1.25 times the length L4 of the raised portions 19 of the second middle lateral grooves 17. Such a configuration of the raised portions can help to improve steering stability and ride comfort in a well-balanced manner.

The length L3 in the tyre axial direction of the raised portions 18 of the first middle lateral grooves 16 is in a range of from 0.30 to 0.80 times the width W1 (shown in FIG. 2) in the tyre axial direction of the first middle land portion 11, for example. The length L4 in the tyre axial direction of the raised portions 19 of the second middle lateral grooves 17 is in a range of from 0.30 to 0.80 times the width W2 (shown in FIG. 2) in the tyre axial direction of the second middle land portion 12, for example.

A depth d2 of the raised portions 18 and 19, for example, is preferably equal to or more than 0.10 times, more preferably equal to or more than 0.20 times a depth d1 of the crown main groove 7, but preferably equal to or less than 0.60 times, more preferably equal to or less than 0.50 times the depth d1. In addition, the first middle lateral grooves 16 and the second middle lateral grooves 17, at both ends thereof in the tyre axial direction, have a depth in a range of from 0.30 to 0.80 times the depth d1 of the crown main groove 7. The first middle lateral grooves 16 and the second middle lateral grooves 17 configured as such can improve steering stability and ride comfort in a well-balanced manner.

As illustrated in FIG. 2, in a plan view of the tread portion, each of the first middle lateral grooves 16 is a curved groove which includes a first convex portion 16a located on a first side with respect to a groove-reference-straight-line 16c that connects both ends of a groove centerline thereof and a second convex portion 16b located on a second side with respect to the groove-reference-straight-line 16c. Similarly, each of the second middle lateral grooves 17 is a curved groove which includes a first convex portion 17a located on the first side with respect to a groove-reference-straight-line 17c that connects both ends of a groove centerline thereof and a second convex portion 17b located on the second side with respect to the groove-reference-straight-line 17c. In some preferred embodiments, the curved grooves have an S-shaped manner.

Since the first middle lateral grooves 16 and the second middle lateral grooves 17 can mitigate stiffness of the respective middle land portions, impact noise generated by the respective middle land portions can be reduced. In particular, the S-shaped first and second middle lateral grooves 16 and 17 can facilitate deformation along the respective groove-reference-straight-lines so that impact noise can be reduced. In addition, the above-mentioned curved grooves can help to reduce pumping noise upon grounding since the curved grooves enable to make the air flowing in the grooves slow down.

In the present embodiment, each first middle lateral groove 16 is configured such that an entire center portion 16d in the tyre axial direction thereof is the above-mentioned raised portion 18. Specifically, each first middle lateral groove 16 includes the center portion 16d (the raised portion 18) traversing the center location in the tyre axial direction of the first middle land portion 11 obliquely, a first outer portion 16e, and a second outer portion 16f. The first outer portion 16e extends from one end side of the center portion 16d at a smaller angle with respect to the tyre axial direction than that of the center portion 16d. The second outer portion 16f extends from the other end side of the center portion 16d at a smaller angle with respect to the tyre axial direction than that of the center portion 16d. In the present embodiment, the first outer portion 16e is arranged on the first tread edge Te1 side with respect to the center portion 16d, and the second outer portion 16f is arranged on the second tread edge Te2 side with respect to the center portion 16d.

Similarly, each second middle lateral grooves 17 is configured such that an entire center portion 17d in the tyre axial direction thereof is the above-mentioned raised portion 19. Specifically, each second middle lateral groove 17 includes the center portion 17d (the raised portion 19) traversing the center location in the tyre axial direction of the second middle land portion 12 obliquely, a first outer portion 17e, and a second outer portion 17f. The first outer portion 17e extends from one end side of the center portion 17d at a smaller angle with respect to the tyre axial direction than that of the center portion 17d. The second outer portion 17f extends from the other end side of the center portion 17d at a smaller angle with respect to the tyre axial direction than that of the center portion 17d. In the present embodiment, the first outer portion 17e is arranged on the first tread edge Te1 side with respect to the center portion 17d, and the second outer portion 17f is arranged on the second tread edge Te2 side with respect to the center portion 17d.

In the present embodiment, the groove-reference-straight-line 16c of each first middle lateral groove 16, for example, is inclined in a first direction (e.g. downward to the right) with respect to the tyre axial direction. In addition, it is preferable that each first middle lateral groove 16 has the raised portion 18 which is inclined in the first direction with respect to the tyre axial direction. In each first middle lateral groove 16, an angle θ1 of the raised portion 18 with respect to the tyre axial direction is greater than an angle of the groove-reference-straight-line 16c with respect to the tyre axial direction. Specifically, the angle θ1 of the raised portion 18 of each first middle lateral groove 16 with respect to the tyre axial direction is preferably in a range of from 5 to 40 degrees, more preferably from 15 to 30 degrees.

In the present embodiment, the groove-reference-straight-line 17c of each second middle lateral groove 17, for example, is inclined with respect to the tyre axial direction in a second direction (e.g., upward to the right) opposite to the first direction.

The first middle lateral grooves 16 and the second middle lateral grooves 17 configured as such can suppress "tyre pull" in which unequal forces cause a vehicle to pull to the side due to the tread pattern even when it is steered straight ahead, thus improving steering stability. In addition, the first middle lateral grooves 16 and the second middle lateral grooves 17 help to disperse frequency ranges of the respective pumping noise, thus improving noise performance.

In each second middle lateral groove 17, it is preferable that the raised portion 19 is inclined in the second direction with respect to the tyre axial direction. In each second middle lateral groove 17, an angle θ2 of the raised portion 19 with respect to the tyre axial direction is greater than an angle of the groove-reference-straight-line 17c with respect to the tyre axial direction. Specifically, the angle θ2 of the raised portion 19 of each second middle lateral groove 17 with respect to the tyre axial direction is preferably in a range of from 20 to 60 degrees, more preferably in a range of from 40 to 55 degrees.

In the present embodiment, the angle θ1 of the raised portion 18 of each first middle lateral groove 16 with respect to the tyre axial direction is smaller than the angle θ2 of the raised portion 19 of each second middle lateral groove 17 with respect to the tyre axial direction. Thus, stiffness of the first middle land portion 11 in the tyre axial direction can be enhanced relatively, improving steering stability further.

As illustrated in FIG. 3, in each first middle lateral groove 16, a length L3 in the tyre axial direction of the raised portion 18 is greater than a length L5 in the tyre axial direction of the first outer portion 16e and a length L6 in the tyre axial direction of the second outer portion 16f. Similarly, in each second middle lateral groove 17, a length L4 in the tyre axial direction of the raised portion 19 is greater than a length L7 in the tyre axial direction of the first outer portion 17e and a length L8 in the tyre axial direction of the second outer portion 17f. The first middle lateral grooves 16 and the second middle lateral grooves 17 configured as such can enhance stiffness of the first middle land portion 11 and the second middle land portion 12 sufficiently, exerting superior steering stability.

In each first middle lateral groove 16, the length L6 in the tyre axial direction of the second outer portion 16f is preferably in a range of from 0.90 to 1.10 times the length L5 in the tyre axial direction of the first outer portion 16e. In the present embodiment, in each first middle lateral groove 16, the length L6 of the second outer portion 16f is the same as the length L5 of the first outer portion 16e.

In each second middle lateral groove 17, it is preferable that the length L8 in the tyre axial direction of the second outer portion 17f is greater than the length L7 in the tyre axial direction of the first outer portion 17e. Specifically, the length L8 of the second outer portion 17f, for example, is preferably in a range of from 1.10 to 2.00 times the length L7 of the first outer portion 17e. Thus, stiffness of the second middle lateral grooves 17 on the first tread edge Te1 side can be enhanced, enabling to provide a linear steering response upon cornering.

Further, by configuring the raised portions 18 and 19 as described above, the respective ranges of frequency of pumping noise generated by the first middle lateral grooves 16 and the second middle lateral grooves 17 can be deviated, generating white noise.

As illustrated in FIG. 2, it is preferable that a length L1 in the tyre circumferential direction of the groove-reference-straight-line 16c of each first middle lateral groove 16 is smaller than a length L2 in the tyre circumferential direction of the groove-reference-straight-line 17c of each second middle lateral groove 17. Such a groove arrangement enables to enhance stiffness in the tyre axial direction of the first middle land portion 11 relatively. Thus, upon cornering where the center of the ground contacting surface moves toward the first tread edge Te1, a linear steering response can be obtained which provides better steering stability.

It is preferable that the length L1 in the tyre circumferential direction of the groove-reference-straight-line 16c of each first middle lateral groove 16 is in a range of from 0.20 to 0.40 times the length in the tyre circumferential direction of the groove-reference-straight-line 17c of each second middle lateral groove 17. Such a groove arrangement can improve a linear steering response upon cornering further.

It is preferable that the length L1 in the tyre circumferential direction of the groove-reference-straight-line 16c of each first middle lateral groove 16, for example, is smaller than pitch lengths P1 in the tyre circumferential direction of the first middle lateral grooves 16. Specifically, the length L1 in the tyre circumferential direction of the groove-reference-straight-line 16c of each first middle lateral groove 16 is preferably in a range of from 0.05 to 0.20 times the pitch lengths P1 in the tyre circumferential direction of the first middle lateral grooves 16, for example. An arrangement of the first middle lateral grooves 16 as such helps to prevent uneven wear of the first middle land portion 11.

In the same view point, it is preferable that the length L2 in the tyre circumferential direction of the groove-reference-straight-line 17c of each second middle lateral groove 17, for example, is smaller than pitch lengths P2 in the tyre circumferential direction of the second middle lateral grooves 17. Specifically, the length L2 in the tyre circumferential direction of the groove-reference-straight-line 17c of each second middle lateral groove 17 is preferably in a range of from 0.35 to 0.50 times the pitch lengths P2 in the tyre circumferential direction of the second middle lateral grooves 17, for example. Note that the pitch lengths P2 of the second middle lateral grooves 17 are the same as the pitch lengths P1 of the first middle lateral grooves 16.

A maximum distance L9 of each first middle lateral groove 16 between a groove edge thereof and the groove-reference-straight-line 16c thereof is smaller than a maximum distance L10 of each second middle lateral groove 17 between a groove edge thereof and the groove-reference-straight-line 17c thereof. Thus, stiffness of the first middle land portion 11 can be enhanced relatively, and the above-mentioned effects can further be improved.

It is preferable that the first middle lateral grooves 16 are arranged so as to be continuous to the respective second middle lateral grooves 17 smoothly through the crown main groove 7. As used herein, "one lateral groove is continuous to another lateral groove smoothly through a main groove" shall mean that respective regions in which the lateral grooves are elongated along the respective groove longitudinal directions, in the tyre circumferential direction, overlap with one another within the main groove, or that the respective regions, in the tyre circumferential direction, are located away from one another within a distance of less than 1.0 mm within the main groove. If a lateral groove is curved, the above-mentioned region is defined such that the lateral groove is elongated while keeping the radius of curvature of an axial end thereof on the main groove side.

The first middle land portion 11 includes a plurality of first middle blocks 21 divided by the first middle lateral grooves 16. The second middle land portion 12 includes a plurality of second middle blocks 22 divided by the second middle lateral grooves 17.

In the present embodiment, each first middle blocks 21, for example, is a smooth block having a ground contacting face which is not provided with any grooves nor sipes. As used herein, "sipe" shall mean a narrow cut having a width of less than 1.5 mm.

Each second middle block 22 is provided with a second middle sipe 23 which extends from the second shoulder main groove 6 and which terminates within the second middle block 22. In the present embodiment, the second middle sipe 23, for example, has a width of from 0.5 to 1.0 mm. Such first middle blocks 21 and second middle blocks 22 can enhance stiffness of the first middle land portion 11 relatively, providing a linear steering response so that steering stability can be improved.

It is preferable that a length L11 in the tyre axial direction of each second middle sipe 23, for example, is in a range of from 0.20 to 0.80 times the width W2 in the tyre axial direction of the second middle land portion 12. Such a second middle sipe 23 can help to improve steering stability and ride comfort in a well-balanced manner.

It is preferable that the raised portion 19 of each second middle lateral groove 17 overlaps with the respective second middle sipes 23 in the tyre axial direction. Thus, the second middle sipes 23 can help to reduce impact noise generated when the second middle land portion 12 grounds, improving noise performance.

For example, a maximum depth of the second middle sipes 23 is in a range of from 0.90 to 1.10 times the depths of the raised portions 19 of the second middle lateral grooves 17. In the present embodiment, the maximum depth of the second middle sipes 23 is the same as the depths of the raised portions 19 of the second middle lateral grooves 17. The second middle sipes 23 can help to prevent uneven wear of the second middle land portion 12.

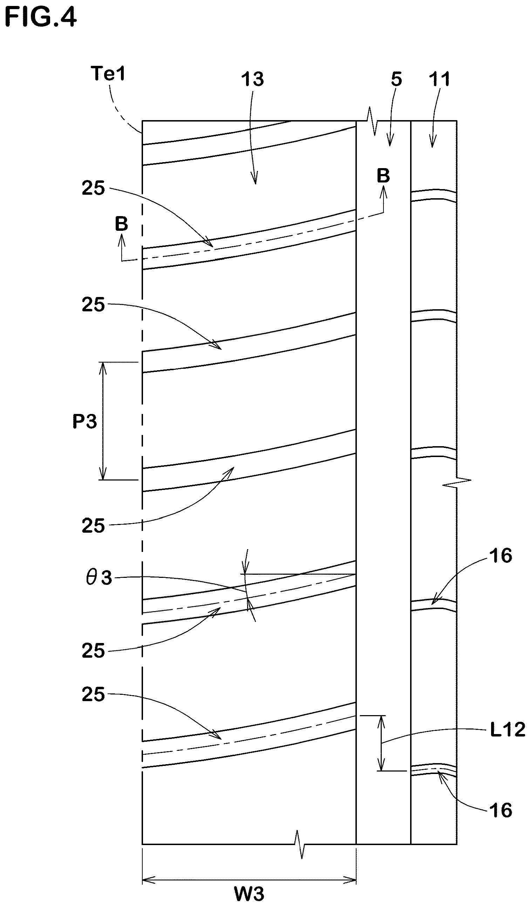

FIG. 4 illustrates an enlarged view of the first shoulder land portion 13. As illustrated in FIG. 4, the first shoulder land portion 13 is provided with a plurality of first shoulder lateral grooves 25 traversing the first shoulder land portion 13 completely in the tyre axial direction. A groove width of the plurality of first shoulder lateral grooves 25, for example, is in a range of from 0.35 to 0.50 times the groove width of the first shoulder main groove 5.

Each first shoulder lateral groove 25, for example, is inclined in the second direction. An angle θ3 of the first shoulder lateral grooves 25, for example, is in a range of from 5 to 15 degrees with respect to the tyre axial direction.

It is preferable that an inner end in the tire axial direction of at least one of the first shoulder lateral grooves 25 is located in a different position in the tyre circumferential direction from the axially outer ends of the respective first middle lateral grooves 16. In addition, it is preferable that a minimum distance L12 in the tyre circumferential direction between the inner end of the at least one of the first shoulder lateral grooves 25 and the outer ends of the respective first middle lateral grooves 16, for example, is equal to or less than 0.35 times pitch lengths P3 in the tyre circumferential direction of the first shoulder lateral grooves 25. Note that the minimum distance L12 is measured between groove centerlines of the inner end and the respective first shoulder lateral grooves 25. Thus, pumping noise generated when regions of intersections of the first shoulder lateral grooves 25 and the first shoulder main groove 5 come into contact with the ground can be reduced.

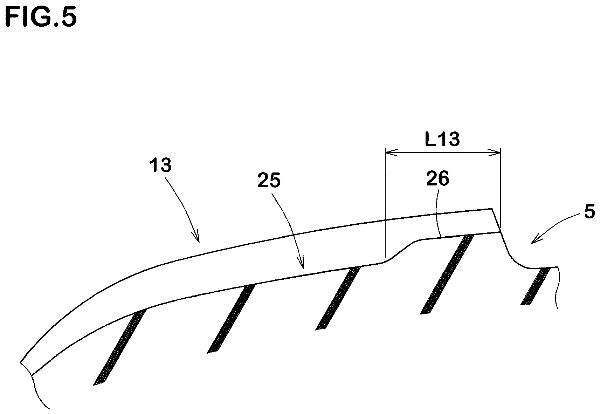

FIG. 5 illustrates a cross-sectional view of one of the first shoulder lateral grooves 25 taken along line B-B of FIG. 4. As illustrated in FIG. 5, one or more first shoulder lateral grooves 25 include a shallow bottom portion 26 having a raised bottom face in an end region on the first shoulder main groove 5 side thereof. Such first shoulder lateral grooves 25 can enhance stiffness of the first shoulder land portion 13, improving steering stability.

Preferably, a length L13 in the tyre axial direction of the shallow bottom portion 26 of the first shoulder lateral grooves 25, for example, is in a range of from 0.20 to 0.30 times the width W3 (shown in FIG. 4) in the tyre axial direction of the first shoulder land portion 13. In some preferred embodiments, the length L13 in the tyre axial direction of the shallow bottom portion 26 of the first shoulder lateral grooves 25, for example, is smaller than lengths L3 and L4 of the raised portions 18 (shown in FIG. 3) and 19 (shown in FIG. 4) of the first middle lateral grooves 16 and the second middle lateral grooves 17, respectively. The first shoulder lateral groove 25 configured as such can prevent excessive increase of stiffness of the first shoulder land portion 13, helping to improve steering stability and ride comfort in a well-balanced manner.

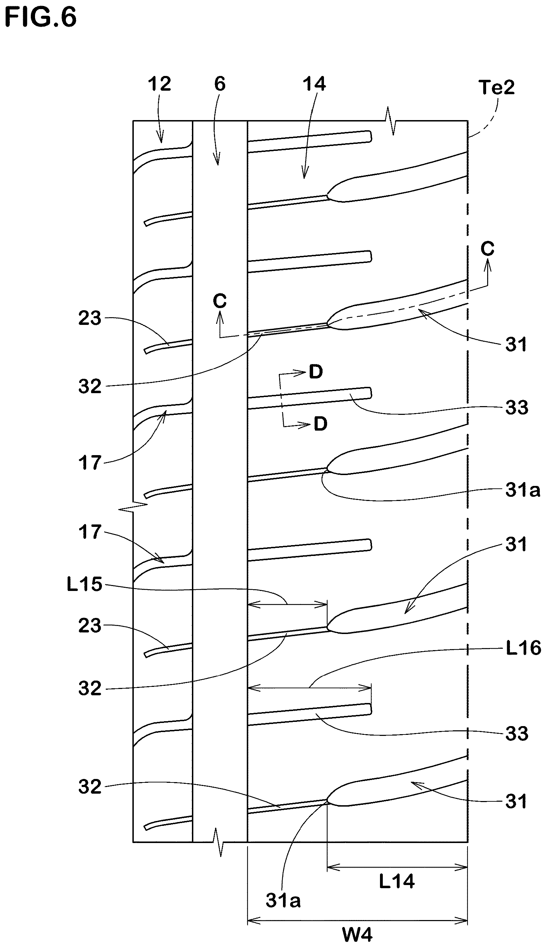

FIG. 6 illustrates an enlarged view of the second shoulder land portion 14. As illustrated in FIG. 6, the second shoulder land portion 14, for example, is provided with a plurality of second shoulder lateral grooves 31, a plurality of connecting sipes 32, and a plurality of non-traversing narrow grooves 33.

Each second shoulder lateral groove 31, for example, extends from the second tread edge Te2 inwardly in the tyre axial direction and terminates so as to have a terminating end 31a within the second shoulder land portion 14. A length L14 in the tyre axial direction of the second shoulder lateral grooves 31, for example, is in a range of from 0.50 to 0.70 times the width W4 in the tyre axial direction of the second shoulder land portion 14. A groove width of the second shoulder lateral grooves 31, for example, is in a range of from 0.30 to 0.50 times the groove width of the second shoulder main groove 6.

Each connecting sipe 32 extends from the terminating end 31a of a respective one of the second shoulder lateral grooves 31 to the second shoulder main groove 6. A length L15 in the tyre axial direction of the connecting sipes 32, for example, is in a range of from 0.30 to 0.50 times the width W4 in the tyre axial direction of the second shoulder land portion 14. The second shoulder lateral grooves 31 and the connecting sipes 32 can help to ensure stiffness of the second shoulder land portion 14, exerting superior steering stability. In addition, the second shoulder lateral grooves 31 and the connecting sipes 32 can generate less pumping noise, improving noise performance.

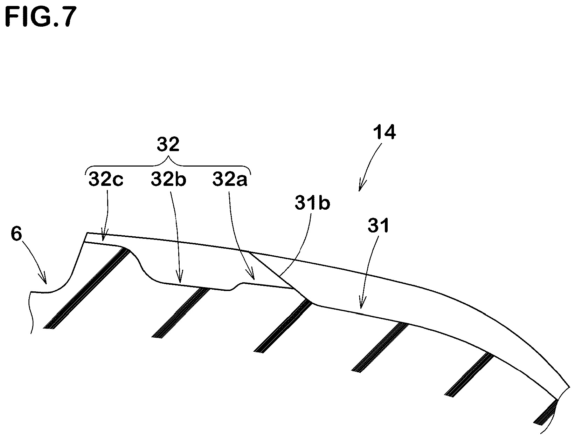

FIG. 7 illustrates a cross-sectional view of one of the second shoulder lateral grooves 31 and one of the connecting sipes 32 taken along line C-C of FIG. 6. As illustrated in FIG. 7, each second shoulder lateral groove 31, for example, in an end on the second shoulder main groove 6 side, includes an inclined bottom face 31b inclined at an angle with respect to the tyre axial direction. Thus, it helps to prevent the second shoulder land portion 14 from being formed a portion in which stiffness thereof is abruptly changed.

Each connecting sipe 32, for example, includes a first portion 32a, a second portion 32b and a third portion 32c which have different depths from one another. The first portion 32a is connected to the second shoulder lateral groove 31. The second portion 32b is connected to the first portion 32a on the second shoulder main groove 6 side and has a depth greater than that of the first portion 32a. The third portion 32c is connected to the second portion 32b on the second shoulder main groove 6 side and has a depth smaller than those of the first portion 32a and the second portion 32b. Such a connecting sipe 32 can mitigate stiffness of the second shoulder land portion 14 moderately, improving steering stability and ride comfort in a well-balanced manner.

In each connecting sipe 32, depths of the first portion 32a and the second portion 32b, for example, are greater than that of the raised portions 19 of the second middle lateral grooves 17. A depth of the third portion 32c of each connecting sipe 32 is preferably smaller than that of the raised portions 19 of the second middle lateral grooves 17. Such a connecting sipe 32 can help to prevent uneven wear of the second shoulder land portion 14.

As illustrated in FIG. 6, the connecting sipes 32 are arranged so as to be continuous to the respective second middle sipes 23 smoothly through the second shoulder main groove 6.

Each non-traversing narrow groove 33, for example, extends from the second shoulder main groove 6 and terminates within the second shoulder land portion 14. A length L16 in the tyre axial direction of each non-traversing narrow groove 33, for example, is in a range of from 0.50 to 0.65 times the width W4 in the tyre axial direction of the second shoulder land portion 14. The non-traversing narrow grooves 33 configured as such can improve noise performance while ensuring steering stability.

In some preferred embodiments, it is preferable that the length L16 in the tyre axial direction of each non-traversing narrow groove 33 is greater than the length L15 in the tyre axial direction of each connecting sipe 32. Such a non-traversing narrow groove 33 can mitigate stiffness of the second shoulder land portion 14 moderately, improving ride comfort.

It is preferable that the non-traversing narrow grooves 33, for example, are arranged so as to be continuous to the respective second middle lateral grooves 17 smoothly through the second shoulder main groove 6. Such a groove arrangement can help to reduce impact noise since the non-traversing narrow grooves 33 as well as the second middle lateral grooves 17 are easy to open when the second shoulder land portion 14 grounds.

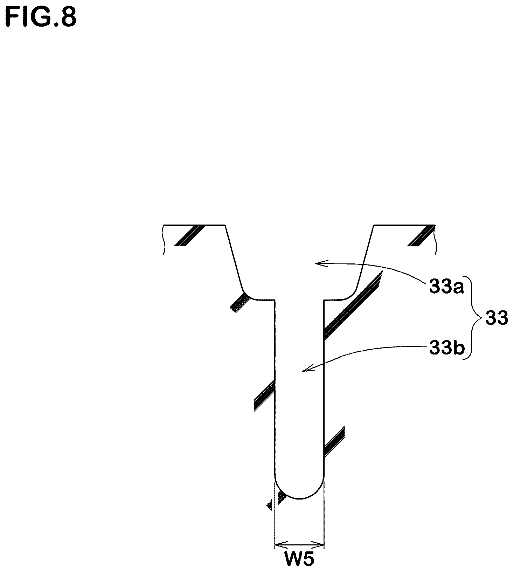

FIG. 8 illustrates a cross-sectional view of one of the non-traversing narrow grooves 33 taken along line D-D of FIG. 6. As illustrated in FIG. 8, each non-traversing narrow groove 33, for example, includes an opening portion 33a on a ground contacting surface side and a narrow width portion 33b located inwardly in the tyre radial direction of the opening portion 33a and having a width smaller than that of the opening portion 33a. A width W5 of the narrow width portion 33b, for example, is in a range of from 0.5 to 1.0 mm. The non-traversing narrow grooves 33 can improve the above-mentioned effects without excessive reduction of stiffness of the second shoulder land portion 14.

As illustrated in FIG. 1, the above-mentioned structure can enhance stiffness of the first middle land portion 11 and the first shoulder land portion 13 relative to the land portions 12 and 14. Thus, the tyre 1 can generate large self-aligning torque (SAT). For example, a passenger car with four wheels equipped with the tyres 1 can generate the front cornering power approximate to the rear cornering power since the front cornering power is reduced by large SAT by the front tyres. Hence, a passenger car equipped with the tyres as its front and rear wheels according to the present embodiment, given a slip angle on the front wheels, tends to transit a neutral cornering state where the front cornering force substantially balances with the rear cornering force, exerting superior steering stability.

While the particularly preferable embodiments in accordance with the present invention have been described in detail, the present invention is not limited to the illustrated embodiments, but can be modified within the scope of the claims.

### [Example-1]

Tyres (205/55R16) having the basic tread pattern shown in FIG. 1 with the first middle lateral grooves and the second middle lateral grooves provided with the raised portions shown in FIG. 3 were manufactured by way of trial based on the detail shown in Table 1. As a comparative example 1 (Ref. 1), tyres having the basic tread pattern shown in FIG. 1 with the first middle lateral grooves and the second middle lateral grooves were also manufactured by way of trial, wherein a length in the tyre axial direction of the raised portions of the first middle lateral grooves is the same as a length in the tyre axial direction of the raised portions of the second middle lateral grooves. Note that the length in the tyre axial direction of the raised portion of the first middle lateral grooves is the same as the length in the tyre axial direction of the raised portion of the tyre axial direction shown in FIG. 3. Then, steering stability and noise performance of each test tyre was tested. The common specification and the test method are as follows:
rim size: 16x6.5J;
tyre inner pressure: front 200 kPa and rear 200 kPa;
test vehicle: FF vehicle having displacement of 1600 cc; and
tyre location: all wheels.

### Steering stability test:

A test driver drove the above-mentioned test vehicle on a dry road, and evaluated steering stability by the driver's sense when driving in low speed ranges (40 to 80 km/h) and high-speed ranges (100 to 120 km/h). The test results are shown in Table 1 using a score based on Ref. 1 being 100. The larger value indicates better steering stability.

### Noise performance test:

Car interior noise was measured when the above-mentioned test vehicle was traveling on a dry road having bumps at speed ranges between 40 to 100 km/h in order to evaluate the maximum level of sound pressure of frequency ranges between 100 to 350 Hz. The test results are shown in Table 1 using an index based on Ref. 1 being 100. The smaller value indicates better noise performance.

Table 1 shows the test results.

**[Table 1]**

| | Ref. 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Length L3 of raised portions of first middle lateral grooves / length L4 of raised portions of second middle lateral grooves | 1.00 | 1.16 | 1.05 | 1.10 | 1.20 | 1.25 | 1.16 | 1.16 | 1.16 | 1.16 |
| Depth d2 of raised portions / depth d1 of crown main groove | 0.37 | 0.37 | 0.37 | 0.37 | 0.37 | 0.37 | 0.10 | 0.20 | 0.50 | 0.60 |
| Steering stability (score) | 100 | 105 | 103 | 105 | 105 | 104 | 106 | 105 | 105 | 104 |
| Noise performance (index) | 100 | 97 | 98 | 98 | 97 | 96 | 99 | 98 | 97 | 97 |

From the test results, it is confirmed that the tyres (Ex. 1 to Ex. 9) improve steering stability and noise performance.

### [Example-2]

Tyres (205/55R16) having the basic tread pattern shown in FIG. 1 with the first middle lateral grooves and the second middle lateral grooves provided with the raised portions shown in FIG. 3 were manufactured by way of trial based on the detail shown in Table 2. As a comparative example 2 (Ref. 2), tyres having the basic tread pattern shown in FIG. 1 were also manufactured by way of trial, wherein no raised portions are provided on the first middle lateral grooves and the second middle lateral grooves. Note that the tyres of Ref. 2 have substantially the same configuration as that of FIG. 1 except the raised portions. Then, steering stability and noise performance of each test tyre was tested. The common specification and the test method are the same as mentioned above. As to the test results, the score as well as the index is indicated based on Ref. 2 being 100.

Table 2 shows the test results.

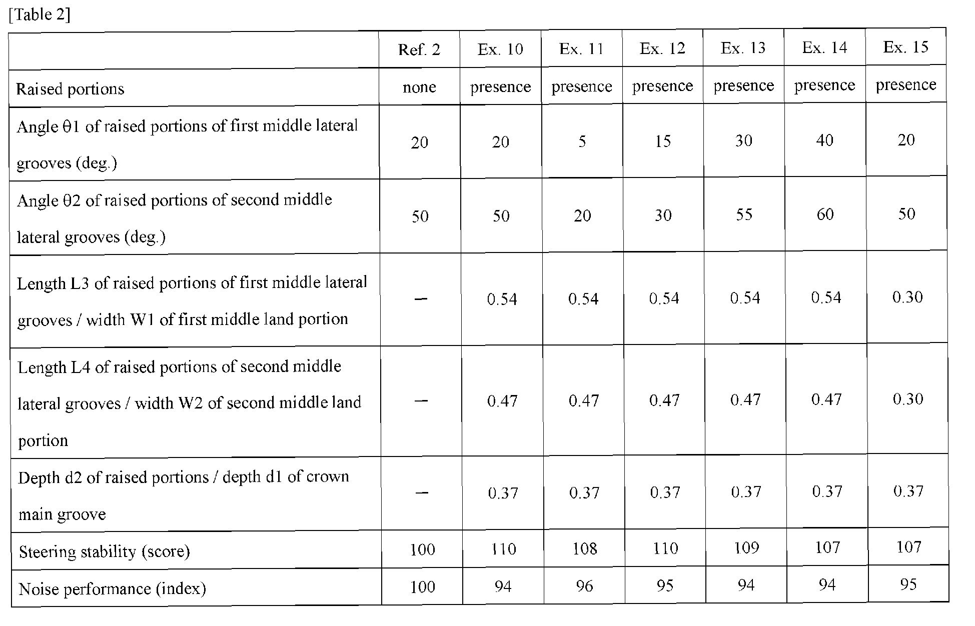

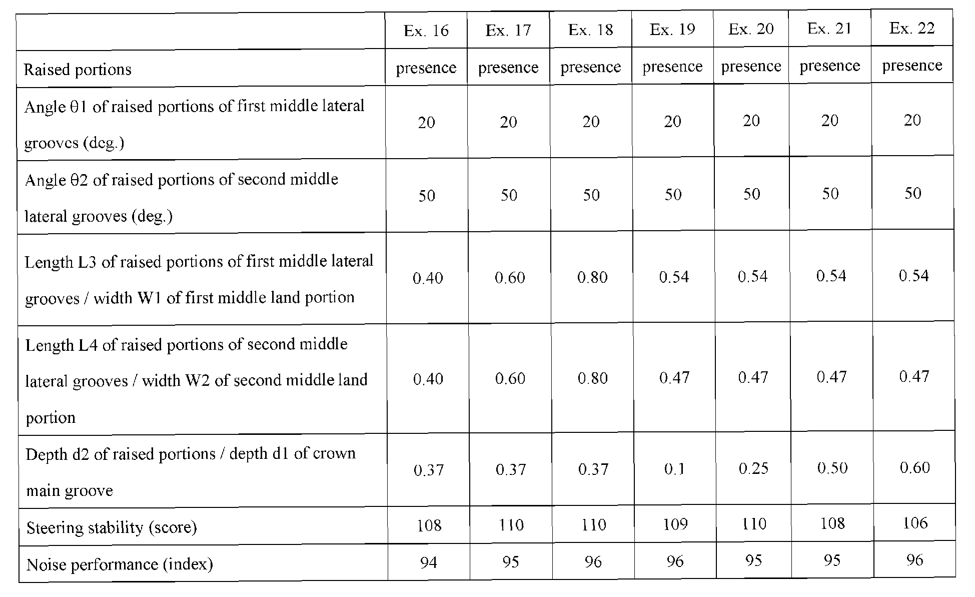

From the test results, it is confirmed that the tyres (Ex. 10 to Ex. 22) improve steering stability and noise performance.

### [Example-3]

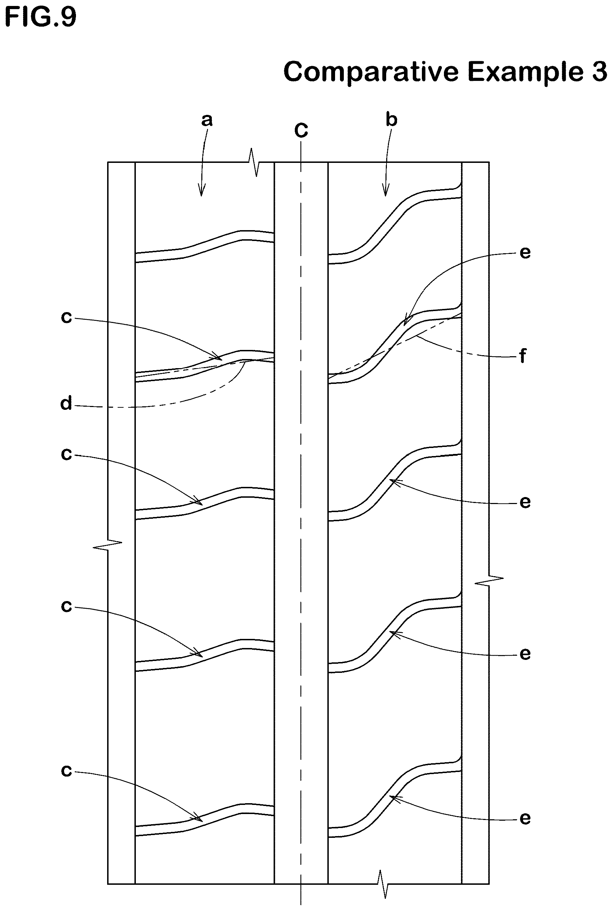

Tyres (205/55R16) having the basic tread pattern shown in FIG. 1 were manufactured by way of trial based on the detail shown in Table 3. As a comparative example 3 (Ref. 3), as illustrated in FIG. 9, the groove-reference-straight-lines d of the first middle lateral grooves c provided on the first middle land portion (a) are inclined with respect to the tyre axial direction in the same direction as the groove-reference-straight-lines f of the second middle lateral grooves (e) provided on the second middle land portion b. Note that the second middle land portion b of the tyres of Ref. 3 is not provided with the second middle sipe. The tread pattern of the tyre of Ref. 3, except the above-mentioned structure, is substantially the same as that of FIG. 1. Then, steering stability and noise performance of each test tyre was tested. The common specification and the test method are the same as mentioned above. As to the test results, the score as well as the index is indicated based on Ref. 3 being 100.

Table 3 shows the test results.

**[Table 3]**

| | Ref. 3 | Ex. 23 | Ex. 24 | Ex. 25 | Ex. 26 | Ex. 27 | Ex. 28 | Ex. 29 |
|---|---|---|---|---|---|---|---|---|
| Figure showing first and second middle land portions | FIG. 9 | FIG. 2 | FIG. 2 | FIG. 2 | FIG. 2 | FIG. 2 | FIG. 2 | FIG. 2 |
| Angle θ1 of raised portions of first middle lateral grooves | 20 | 20 | 20 | 20 | 20 | 20 | 50 | 50 |
| Angle θ2 of raised portions of second middle lateral grooves | 50 | 50 | 50 | 50 | 50 | 50 | 50 | 20 |
| Length L11 of second middle sipes / width W2 of second middle land portion | - | 0.35 | 0.20 | 0.30 | 0.50 | 0.80 | 0.35 | 0.35 |
| Steering stability (score) | 100 | 107 | 106 | 106 | 105 | 104 | 103 | 101 |
| Noise performance (index) | 100 | 95 | 97 | 96 | 95 | 95 | 95 | 96 |

From the test results, it is confirmed that the tyres (Ex. 23 to Ex. 29) improve steering stability and noise performance.

## Claims

1. A tyre (1) comprising:
a tread portion (2) having a designated mounting direction to a vehicle, the tread portion (2) comprising
a first tread edge (Te1) and a second tread edge (Te2) to be located outwardly and inwardly of a vehicle, respectively, when being mounted to the vehicle,
two or more main grooves (3) extending continuously in a tyre circumferential direction between the first tread edge (Te1) and the second tread edge (Te2), and
two or more land portions (4) divided by the main grooves (3), wherein
the main grooves (3) comprise a first shoulder main groove (5) disposed between the first tread edge (Te1) and a tyre equator (C), a second shoulder main groove (6) disposed between the second tread edge (Te2) and the tyre equator (C), and a crown main groove (7) disposed between the first shoulder main groove (5) and the second shoulder main groove (6),
the land portions comprise (4) a first middle land portion (11) defined between the first shoulder main groove (5) and the crown main groove (7), and a second middle land portion (12) defined between the second shoulder main groove (6) and the crown main groove (7),
the second middle land portion (12) is provided with two or more second middle lateral grooves (17) traversing the second middle land portion (12) completely in the tyre axial direction, and
at least one of the second middle lateral grooves (17) comprises a raised portion (19) in which a groove bottom thereof is raised, the raised portion (19) of the at least one of the second middle lateral grooves (17) traversing a center location in the tyre axial direction of the second middle land portion (12),
**characterized in that**
the first middle land portion (11) is provided with two or more first middle lateral grooves (16) traversing the first middle land portion (11) completely in a tyre axial direction,
at least one of the first middle lateral grooves (12) comprises a raised portion (18) in which a groove bottom thereof is raised, the raised portion (18) of the at least one of the first middle lateral grooves (16) traversing a center location in the tyre axial direction of the first middle land portion (11), and
a length (L3) in the tyre axial direction of the raised portion (18) of the at least one of the first middle lateral grooves (16) is greater than a length (L4) in the tyre axial direction of the raised portion (19) of the at least one of the second middle lateral grooves (17).

2. The tyre (1) according to claim 1, wherein
the length (L3) in the tyre axial direction of the raised portion (18) of the at least one of the first middle lateral grooves (16) is in a range of from 1.05 to 1.25 times the length (L4) in the tyre axial direction of the raised portion (19) of the at least one of the second middle lateral grooves (12).

3. The tyre (1) according to claim 1 or 2, wherein
a depth (d2) of the raised portion (18) of the at least one of the first middle lateral grooves (16) and a depth (d2) of the raised portion (19) of the at least one of the second middle lateral grooves (17) are in a range of from 0.10 to 0.60 times a depth (d1) of the crown main groove (7).

4. The tyre (1) according to any one of claims 1 to 3, wherein
in a plan view of the tread portion (2), each of the first middle lateral grooves (16) and the second middle lateral grooves (17) is provided with the raised portion (18, 19) which is inclined at an angle (θ1, θ2) with respect to the tyre axial direction, a first outer portion (16e, 17e) extending from a first end of the raised portion (18, 19) and having a smaller angle with respect to the tyre axial direction than the angle of the raised portion (18, 19), and a second outer portion (16f, 17f) extending from a second end of the raised portion (18, 19) and having a smaller angle with respect to the tyre axial direction than the angle of the raised portion (18, 19), so as to form a curved groove.

5. The tyre (1) according to claim 4, wherein
the curved groove has an S-shaped manner.

6. The tyre (1) according to claim 4 or 5, wherein
in each of the first middle lateral grooves (16) and the second middle lateral grooves (17), a length (L3, L4) in the tyre axial direction of the raised portion (18, 19) is greater than those in the tyre axial direction of the first outer portion (16e, 17e) and the second outer portion (16f, 17f).

7. The tyre (1) according to any one of claims 4 to 6, wherein
in each of the second middle lateral grooves (17),
a length (L8) in the tyre axial direction of the second outer portion (17f) is greater than a length (L7) in the tyre axial direction of the first outer portion (17e).

8. The tyre (1) according to any one of claims 1 to 7, wherein
in a plan view of the tread portion (2), each of the first middle lateral grooves (16) and the second middle lateral grooves (17) is a curved groove which comprises a first convex portion (16a, 17a) located on a first side with respect to a groove-reference-straight-line (16c, 17c) that connects both ends of a groove centerline thereof and a second convex portion (16b, 17b) located on a second side with respect to the groove-reference-straight-line (16c, 17c) of the curved groove.

9. The tyre (1) according to claim 8, wherein
in a plan view of the tread portion (2),
the raised portion (18) of the at least one of the first middle lateral grooves (16) is inclined in a first direction with respect to the tyre axial direction, and
the raised portion (19) of the at least one of the second middle lateral grooves (17) is inclined in a second direction which is opposite to the first direction with respect to the tyre axial direction.

10. The tyre (1) according to claim 9, wherein
an angle (θ1) with respect to the tyre axial direction of the raised portion (18) of the at least one of the first middle lateral grooves (16) is smaller than an angle (θ2) with respect to the tyre axial direction of the raised portion (19) of the at least one of the second middle lateral grooves (17).

11. The tyre (1) according to any one of claims 8 to 10, wherein
the first middle lateral grooves (16) and the second middle lateral grooves (17), at both ends thereof in the tyre axial direction, have a depth in a range of from 0.30 to 0.80 times a depth (d1) of the crown main groove (7).

12. The tyre according to any one of claims 8 to 11, wherein
a length (L3) in the tyre axial direction of the raised portion (18) of the at least one of the first middle lateral grooves (16) is in a range of from 0.30 to 0.80 times a width (W1) in the tyre axial direction of the first middle land portion (11) .

13. The tyre (1) according to any one of claims 8 to 12, wherein
a length (L4) in the tyre axial direction of the raised portion (19) of the least one of the second middle lateral grooves (17) is in a range of from 0.30 to 0.80 times a width (W2) in the tyre axial direction of the second middle land portion (12).

14. The tyre (1) according to any one of claims 1 to 13, wherein
the first middle land portion (11) comprises two or more first middle blocks (21) divided by the first middle lateral grooves (16),
the second middle land portion (12) comprises two or more second middle blocks (22) divided by the second middle lateral grooves (17),
each first middle lateral groove (16) has a groove-reference-straight-line (16c) that connects both ends of a groove centerline thereof being inclined in a first direction with respect to the tyre axial direction, and
each second middle lateral groove (17) has a groove-reference-straight-line (17c) that connects both ends of a groove centerline thereof being inclined in a second direction which is opposite to the first direction with respect to the tyre axial direction.

15. The tyre (1) according to claim 14, wherein
each first middle block (21) is a smooth block having a ground contacting face which is not provided with any grooves nor sipes, and
each second middle (22) block is provided with at least one second middle sipe (23) extending from the second shoulder main groove (6) and terminating within the second middle block (22).

## Patentansprüche

1. Reifen (1), umfassend:
einen Laufflächenabschnitt (2) mit einer bestimmten Montagerichtung an einem Fahrzeug, wobei der Laufflächenabschnitt (2) umfasst
eine erste Laufflächenkante (Te1) und eine zweite Laufflächenkante (Te2), die außen bzw. innen von einem Fahrzeug anzuordnen sind, wenn sie an dem Fahrzeug montiert werden,
zwei oder mehr Hauptrillen (3), die sich kontinuierlich in einer Reifenumfangsrichtung zwischen der ersten Laufflächenkante (Te1) und der zweiten Laufflächenkante (Te2) erstrecken, und
zwei oder mehr Landabschnitte (4), die durch die Hauptrillen (3) geteilt sind,
wobei
die Hauptrillen (3) eine erste Schulterhauptrille (5), die zwischen der ersten Laufflächenkante (Te1) und einem Reifenäquator (C) angeordnet ist, eine zweite Schulterhauptrille (6), die zwischen der zweiten Laufflächenkante (Te2) und dem Reifenäquator (C) angeordnet ist, und eine Kronenhauptrille (7) umfassen, die zwischen der ersten Schulterhauptrille (5) und der zweiten Schulterhauptrille (6) angeordnet ist,
die Landabschnitte (4) einen ersten mittleren Landabschnitt (11), der zwischen der ersten Schulterhauptrille (5) und der Kronenhauptrille (7) definiert ist, und einen zweiten mittleren Landabschnitt (12), der zwischen der zweiten Schulterhauptrille (6) und der Kronenhauptrille (7) definiert ist, umfassen,
der zweite mittlere Landabschnitt (12) mit zwei oder mehr zweiten mittleren Querrillen (17) versehen ist, die den zweiten mittleren Landabschnitt (12) vollständig in der axialen Richtung des Reifens durchqueren, und
mindestens eine der zweiten mittleren Querrillen (17) einen erhabenen Abschnitt (19) aufweist, in dem ihr Rillenboden erhaben ist, wobei der erhabene Abschnitt (19) der mindestens einen der zweiten mittleren Querrillen (17) eine zentrale Stelle in der axialen Richtung des Reifens des zweiten mittleren Landabschnitts (12) durchquert,
**dadurch gekennzeichnet, dass**
der erste mittlere Landabschnitt (11) mit zwei oder mehr ersten mittleren Querrillen (16) versehen ist, die den ersten mittleren Landabschnitt (11) in einer axialen Richtung des Reifens vollständig durchqueren,
mindestens eine der ersten mittleren Querrillen (12) einen erhabenen Abschnitt (18) aufweist, in dem ihr Rillenboden erhaben ist, wobei der erhabene Abschnitt (18) der mindestens einen der ersten mittleren Querrillen (16) eine zentrale Stelle in der axialen Richtung des Reifens des ersten mittleren Landabschnitts (11) durchquert, und
eine Länge (L3) in der axialen Richtung des Reifens des erhabenen Abschnitts (18) der mindestens einen der ersten mittleren Querrillen (16) größer ist als eine Länge (L4) in der axialen Richtung des Reifens des erhabenen Abschnitts (19) der mindestens einen der zweiten mittleren Querrillen (17).

2. Reifen (1) nach Anspruch 1, wobei die Länge (L3) in der axialen Richtung des Reifens des erhabenen Abschnitts (18) der mindestens einen der ersten mittleren Querrillen (16) in einem Bereich des 1,05- bis 1,25-fachen der Länge (L4) in der axialen Richtung des Reifens des erhabenen Abschnitts (19) der mindestens einen der zweiten mittleren Querrillen (12) liegt.

3. Reifen (1) nach Anspruch 1 oder 2, wobei eine Tiefe (d2) des erhabenen Abschnitts (18) der mindestens einen der ersten mittleren Querrillen (16) und eine Tiefe (d2) des erhabenen Abschnitts (19) der mindestens einen der zweiten mittleren Querrillen (17) in einem Bereich vom 0,10- bis 0,60-fachen einer Tiefe (d1) der Kronenhauptrille (7) liegen.

4. Reifen (1) nach einem der Ansprüche 1 bis 3, wobei in einer Draufsicht auf den Laufflächenabschnitt (2) jede der ersten mittleren Querrillen (16) und der zweiten mittleren Querrillen (17) mit dem erhabenen Abschnitt (18, 19), der unter einem Winkel (θ1, θ2) in Bezug auf die axiale Richtung des Reifens geneigt ist, einem ersten äußeren Abschnitt (16e, 17e), der sich von einem ersten Ende des erhabenen Abschnitts (18, 19) aus erstreckt und einen kleineren Winkel in Bezug auf die axiale Richtung des Reifens als der Winkel des erhabenen Abschnitts (18, 19) aufweist, und einem zweiten äußeren Abschnitt (16f, 17f), der sich von einem zweiten Ende des erhabenen Abschnitts (18, 19) aus erstreckt und einen kleineren Winkel in Bezug auf die axiale Richtung des Reifens als der Winkel des erhabenen Abschnitts (18, 19) aufweist, versehen ist, um eine gekrümmte Rille zu bilden.

5. Reifen (1) nach Anspruch 4, wobei die gekrümmte Rille eine S-förmige Form aufweist.

6. Reifen (1) nach Anspruch 4 oder 5, wobei in jeder der ersten mittleren Querrillen (16) und der zweiten mittleren Querrillen (17) eine Länge (L3, L4) in der axialen Richtung des Reifens des erhöhten Abschnitts (18, 19) größer ist als die in der axialen Richtung des Reifens des ersten äußeren Abschnitts (16e, 17e) und des zweiten äußeren Abschnitts (16f, 17f).

7. Reifen (1) nach einem der Ansprüche 4 bis 6, wobei
in jeder der zweiten mittleren Querrillen (17),
eine Länge (L8) in der axialen Richtung des Reifens des zweiten äußeren Abschnitts (17f) größer ist als eine Länge (L7) in der axialen Richtung des Reifens des ersten äußeren Abschnitts (17e).

8. Reifen (1) nach einem der Ansprüche 1 bis 7, wobei in einer Draufsicht auf den Laufflächenabschnitt (2) jede der ersten mittleren Querrillen (16) und der zweiten mittleren Querrillen (17) eine gekrümmte Rille ist, die einen ersten konvexen Abschnitt (16a, 17a), der sich auf einer ersten Seite in Bezug auf eine Rillenbezugsgerade (16c, 17c) befindet, die beide Enden ihrer Rillenmittellinie verbindet, und einen zweiten konvexen Abschnitt (16b, 17b), der sich auf einer zweiten Seite in Bezug auf die Rillenbezugsgerade (16c, 17c) der gekrümmten Rille befindet, umfasst.

9. Reifen (1) nach Anspruch 8, wobei
in einer planaren Ansicht des Laufflächenabschnitts (2),
der erhabene Abschnitt (18) der mindestens einen der ersten mittleren Querrillen (16) in einer ersten Richtung in Bezug auf die axiale Richtung des Reifens geneigt ist, und
der erhabene Abschnitt (19) der mindestens einen der zweiten mittleren Querrillen (17) in einer zweiten Richtung, die der ersten Richtung entgegengesetzt ist, in Bezug auf die axiale Richtung des Reifens geneigt ist.

10. Reifen (1) nach Anspruch 9, wobei ein Winkel (θ1) in Bezug auf die axiale Richtung des Reifens des erhabenen Abschnitts (18) der mindestens einen der ersten mittleren Querrillen (16) kleiner ist als ein Winkel (θ2) in Bezug auf die axiale Richtung des Reifens des erhabenen Abschnitts (19) der mindestens einen der zweiten mittleren Querrillen (17).

11. Reifen (1) nach einem der Ansprüche 8 bis 10, wobei die ersten mittleren Querrillen (16) und die zweiten mittleren Querrillen (17) an ihren beiden Enden in der axialen Richtung des Reifens eine Tiefe in einem Bereich vom 0,30- bis 0,80-fachen einer Tiefe (d1) der Kronenhauptrille (7) aufweisen.

12. Reifen nach einem der Ansprüche 8 bis 11, wobei eine Länge (L3) in der axialen Richtung des Reifens des erhabenen Abschnitts (18) der mindestens einen der ersten mittleren Querrillen (16) in einem Bereich vom 0,30-bis 0,80-fachen einer Breite (W1) in der axialen Richtung des Reifens des ersten mittleren Landabschnitts (11) liegt.

13. Reifen (1) nach einem der Ansprüche 8 bis 12, wobei eine Länge (L4) in der axialen Richtung des Reifens des erhabenen Abschnitts (19) der mindestens einen der zweiten mittleren Querrillen (17) in einem Bereich vom 0,30 bis 0,80-fachen einer Breite (W2) in der axialen Richtung des Reifens des zweiten mittleren Landabschnitts (12) liegt.

14. Reifen (1) nach einem der Ansprüche 1 bis 13, wobei
der erste mittlere Landabschnitt (11) zwei oder mehr erste mittlere Blöcke (21) umfasst, die durch die ersten mittleren Querrillen (16) geteilt sind,
der zweite mittlere Landabschnitt (12) zwei oder mehr zweite mittlere Blöcke (22) umfasst, die durch die zweiten mittleren Querrillen (17) geteilt sind,
jede erste mittlere Querrille (16) eine Rillenbezugsgerade (16c) aufweist, die beide Enden ihrer Rillenmittellinie verbindet, die in einer ersten Richtung in Bezug auf die axiale Richtung des Reifens geneigt ist, und
jede zweite mittlere Querrille (17) eine Rillenbezugsgerade (17c) aufweist, die beide Enden ihrer Rillenmittellinie verbindet, die in einer zweiten Richtung, die der ersten Richtung entgegengesetzt ist, in Bezug auf die axiale Richtung des Reifens geneigt ist.

15. Reifen (1) nach Anspruch 14, wobei
jeder erste mittlere Block (21) ein glatter Block mit einer Bodenkontaktfläche ist, die weder mit Rillen noch mit Feinschnitten versehen ist, und
jeder zweite mittlere Block (22) mit mindestens einem zweiten mittleren Feinschnitt (23) versehen ist, der sich von der zweiten Schulterhauptrille (6) aus erstreckt und innerhalb des zweiten mittleren Blocks (22) endet.

## Revendications

1. Pneumatique (1) comprenant :
une portion formant bande de roulement (2) ayant une direction de montage par conception sur un véhicule, la portion formant bande de roulement (2) comprenant :
un premier bord de bande de roulement (Te1) et un second bord de bande de roulement (Te2) qu'il s'agit de placer à l'extérieur et à l'intérieur d'un véhicule, respectivement, quand le pneumatique est monté sur le véhicule,
deux ou plusieurs rainures principales (3) s'étendant en continu dans une direction circonférentielle du pneumatique entre le premier bord de bande de roulement (Te1) et le second bord de bande de roulement (Te2), et
deux ou plusieurs portions en relief (4) divisées par les rainures principales (3), dans lequel
les rainures principales (3) comprennent une première rainure principale d'épaulement (5) disposée entre le premier bord de bande de roulement (Te1) et un équateur de pneumatique (C), une seconde rainure principale d'épaulement (6) disposée entre le second bord de bande de roulement (Te2) et l'équateur de pneumatique (C), et une rainure principale de couronne (7) disposée entre la première rainure principale d'épaulement (5) et la seconde rainure principale d'épaulement (6),
les portions en relief (4) comprennent une première portion en relief médiane (11) définie entre la première rainure principale d'épaulement (5) et la rainure principale de couronne (7), et une seconde portion en relief médiane (12) définie entre la seconde rainure principale d'épaulement (6) et la rainure principale de couronne (7),
la seconde portion en relief médiane (12) est dotée de deux ou plusieurs secondes rainures latérales médianes (17) traversant la seconde portion en relief médiane (12) complètement dans la direction axiale du pneumatique, et
au moins une des secondes rainures latérales médianes (17) comprend une portion surélevée (19) dans laquelle un fond de rainure de celle-ci est surélevé, la portion surélevée (19) de ladite au moins une des secondes rainures latérales médianes (17) traversant un emplacement central dans la direction axiale du pneumatique de la seconde portion en relief médiane (12),
**caractérisé en ce que**
la première portion en relief médiane (11) est dotée de deux ou plusieurs premières rainures latérales médianes (16) traversant la première portion en relief médiane (11) complètement dans une direction axiale du pneumatique,
au moins une des premières rainures latérales médianes (12) comprend une portion surélevée (18) dans laquelle un fond de rainure de celle-ci est surélevé, la portion surélevée (18) de ladite au moins une des premières rainures latérales médianes (16) traversant un emplacement central dans la direction axiale du pneumatique de la première portion en relief médiane (11), et
une longueur (L3) dans la direction axiale du pneumatique de la portion surélevée (18) de ladite au moins une des premières rainures latérales médianes (16) est plus grande qu'une longueur (L4) dans la direction axiale du pneumatique de la portion surélevée (19) de ladite au moins une des secondes rainures latérales médianes (17).

2. Pneumatique (1) selon la revendication 1, dans lequel la longueur (L3) dans la direction axiale du pneumatique de la portion surélevée (18) de ladite au moins une des premières rainures latérales médianes (16) est dans une plage allant de 1,05 à 1,25 fois la longueur (L4) dans la direction axiale du pneumatique de la portion surélevée (19) de ladite au moins une des secondes rainures latérales médianes (12).

3. Pneumatique (1) selon la revendication 1 ou 2, dans lequel une profondeur (d2) de la portion surélevée (18) de ladite au moins une des premières rainures latérales médianes (16) et une profondeur (d2) de la portion surélevée (19) de ladite au moins une des secondes rainures latérales médianes (17) sont dans une plage allant de 0,10 à 0,60 fois une profondeur (d1) de la rainure principale de couronne (7).

4. Pneumatique (1) selon l'une quelconque des revendications 1 à 3, dans lequel
dans une vue en plan de la portion formant bande de roulement (2), chacune des premières rainures latérales médianes (16) et des secondes rainures latérales médianes (17) est dotée de la portion surélevée (18, 19) qui est inclinée sous un angle (θ1, θ2) par rapport à la direction axiale du pneumatique, d'une première portion extérieure (16e, 17e) s'étendant depuis une première extrémité de la portion surélevée (18, 19) et ayant un angle plus petit par rapport à la direction axiale du pneumatique que l'angle de la portion surélevée (18, 19), et d'une seconde portion extérieure (16f, 17f) s'étendant depuis une seconde extrémité de la portion surélevée (18, 19) et ayant un angle plus petit par rapport à la direction axiale du pneumatique que l'angle de la portion surélevée (18, 19), de manière à former une rainure incurvée.

5. Pneumatique (1) selon la revendication 4, dans lequel la rainure incurvée a une forme en S.

6. Pneumatique (1) selon la revendication 4 ou 5, dans lequel dans chacune des premières rainures latérales médianes (16) et des secondes rainures latérales médianes (17), une longueur (L3, L4) dans la direction axiale du pneumatique de la portion surélevée (18, 19) est plus grande que celles dans la direction axiale du pneumatique de la première portion extérieure (16e, 17e) et de la seconde portion extérieure (16f, 17f).

7. Pneumatique (1) selon l'une quelconque des revendications 4 à 6, dans lequel
dans chacune des secondes rainures latérales médianes (17),
une longueur (L8) dans la direction axiale du pneumatique de la seconde portion extérieure (17f) est plus grande qu'une longueur (L7) dans la direction axiale du pneumatique de la première portion extérieure (17e).

8. Pneumatique (1) selon l'une quelconque des revendications 1 à 7, dans lequel
dans une vue en plan de la portion formant bande de roulement (2), chacune des premières rainures latérales médianes (16) et des secondes rainures latérales médianes (17) est une rainure incurvée qui comprend une première portion convexe (16a, 17a) située sur un premier côté par rapport à une ligne droite de référence de rainure (16c, 17c) qui connecte les deux extrémités d'une ligne centrale de rainure de celle-ci, et une seconde portion convexe (16b, 17b) située sur un second côté par rapport à la ligne droite de référence de rainure (16c, 17c) de la rainure incurvée.

9. Pneumatique (1) selon la revendication 8, dans lequel
dans une vue en plan de la portion formant bande de roulement (2),
la portion surélevée (18) de ladite au moins une des premières rainures latérales médianes (16) est inclinée dans une première direction par rapport à la direction axiale du pneumatique et
la portion surélevée (19) de ladite au moins une des secondes rainures latérales médianes (17) est inclinée dans une seconde direction qui est opposée à la première direction par rapport à la direction axiale du pneumatique.

10. Pneumatique (1) selon la revendication 9, dans lequel
un angle (θ1) par rapport à la direction axiale du pneumatique de la portion surélevée (18) de ladite au moins une des premières rainures latérales médianes (16) est plus petit qu'un angle (θ2) par rapport à la direction axiale du pneumatique de la portion surélevée (19) de ladite au moins une des secondes rainures latérales médianes (17).

11. Pneumatique (1) selon l'une quelconque des revendications 8 à 10, dans lequel
les premières rainures latérales médianes (16) et les secondes rainures latérales médianes (17), aux deux extrémités de celles-ci dans la direction axiale du pneumatique, ont une profondeur dans une plage allant de 0,30 à 0,80 fois une profondeur (d1) de la rainure principale de couronne (7).

12. Pneumatique selon l'une quelconque des revendications 8 à 11, dans lequel
une longueur (L3) dans la direction axiale du pneumatique de la portion surélevée (18) de ladite au moins une des premières rainures latérales médianes (16) est dans une plage allant de 0,30 à 0,80 fois une largeur (W1) dans la direction axiale du pneumatique de la première portion en relief médiane (11).

13. Pneumatique (1) selon l'une quelconque des revendications 8 à 12, dans lequel
une longueur (L4) dans la direction axiale du pneumatique de la portion surélevée (19) de ladite au moins une des secondes rainures latérales médianes (17) est dans une plage allant de 0,30 à 0,80 fois une largeur (W2) dans la direction axiale du pneumatique de la seconde portion en relief médiane (12).

14. Pneumatique (1) selon l'une quelconque des revendications 1 à 13, dans lequel
la première portion en relief médiane (11) comprend deux ou plusieurs premiers blocs médians (21) divisés par les premières rainures latérales médianes (16),
la seconde portion en relief médiane (12) comprend deux ou plusieurs seconds blocs médians (22) divisés par les secondes rainures latérales médianes (17),
chaque première rainure latérale médiane (16) a une ligne droite de référence de rainure (16c) qui connecte les deux extrémités d'une ligne centrale de rainure de celle-ci étant inclinée dans une première direction par rapport à la direction axiale du pneumatique, et
chaque seconde rainure latérale médiane (17) a une ligne droite de référence de rainure (17c) qui connecte les deux extrémités d'une ligne centrale de rainure de celle-ci étant inclinée dans une seconde direction qui est opposée à la première direction par rapport à la direction axiale du pneumatique.

15. Pneumatique (1) selon la revendication 14, dans lequel
chaque premier bloc médian (21) est un bloc lisse ayant une face de contact au sol qui n'est dotée d'aucune rainure ni fente, et
chaque second bloc médian (22) est doté d'au moins une seconde fente médiane (23) s'étendant depuis la seconde rainure principale d'épaulement (6) et se terminant à l'intérieur du second bloc médian (22).
